(19) Europäisches Patentamt / European Patent Office / Office européen des brevets

(11) **EP 3 957 496 B1**

(12) **EUROPEAN PATENT SPECIFICATION**

(45) Date of publication and mention
of the grant of the patent:
**16.07.2025   Bulletin 2025/29**

(21) Application number: **20806130.9**

(22) Date of filing: **23.04.2020**

(51) International Patent Classification (IPC):
**B60C 11/00** (2006.01)        **B29D 30/20** (2006.01)
**B29D 30/60** (2006.01)        **B60C 1/00** (2006.01)
**C08K 3/013** (2018.01)        **C08K 3/04** (2006.01)
**C08K 3/36** (2006.01)        **C08L 7/00** (2006.01)
**C08L 21/00** (2006.01)        **C08L 23/22** (2025.01)
**B60C 11/14** (2006.01)

(52) Cooperative Patent Classification (CPC):
(C-Sets available)
**C08K 11/00; B29D 30/32; B29D 30/60;**
**B29D 30/66; B60C 1/0016; B60C 11/0058;**
**C08K 3/04; C08K 3/36; C08K 7/14; C08L 7/00;**
B29D 2030/665; B60C 2011/142; B60C 2011/145;
C08K 2201/003; C08K 2201/005        (Cont.)

(86) International application number:
**PCT/JP2020/017508**

(87) International publication number:
**WO 2020/230576 (19.11.2020 Gazette 2020/47)**

(54) **PNEUMATIC TIRE AND METHOD FOR MANUFACTURING SAME**

LUFTREIFEN UND VERFAHREN ZUR HERSTELLUNG DAVON

PNEU ET SON PROCÉDÉ DE FABRICATION

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **13.05.2019   JP 2019090758**

(43) Date of publication of application:
**23.02.2022   Bulletin 2022/08**

(73) Proprietor: **Sumitomo Rubber Industries, Ltd.**
**Kobe-shi, Hyogo 651-0072 (JP)**

(72) Inventors:
• **KASAI, Yuki**
**Kobe-shi, Hyogo 651-0072 (JP)**
• **HIRO, Masataka**
**Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
CN-A- 107 880 337        CN-U- 205 033 879
JP-A- 2000 264 015        JP-A- 2001 138 717
JP-A- 2004 034 744        JP-A- 2005 162 865
JP-A- 2005 212 536        JP-A- 2006 002 119
JP-A- 2006 298 215        JP-A- 2007 009 013
JP-A- 2008 273 436        JP-A- 2009 126 968
JP-A- 2013 057 015        JP-A- 2016 088 031
JP-A- 2018 104 652        JP-A- 2018 119 025
JP-U- 3 156 098        KR-A- 20110 073 067
US-A- 2007 221 303

(52) Cooperative Patent Classification (CPC): (Cont.)

C-Sets
**C08L 7/00, C08L 9/00, C08K 3/04, C08K 3/36,
C08K 7/14;
C08L 7/00, C08L 9/00, C08K 3/04, C08K 3/36,
C08K 11/00**

## Description

[TECHNICAL FIELD]

The present invention relates to pneumatic tires, particularly studless tires and methods for manufacturing the same. More specifically, the present invention relates to a pneumatic tire in which deterioration of the appearance of the tire is suppressed when the tire is driven on a dry road surface for a long time while maintaining excellent performance on ice, and a method for manufacturing the same.

[BACKGROUND ART]

Studless tires are known as tires that can exert a large driving force and braking force on snowy roads and icy roads (ice and snow road surfaces) while suppressing the occurrence of environmental problems such as dust, and are disclosed in Patent Document 1 and the like.

In order to exert a large driving force and braking force on ice and snow road surfaces, pneumatic tires such as studless tires are required to have excellent starting performance, acceleration performance and braking performance of tires on ice and snow road surfaces, that is, excellent performance on ice. Therefore, various methods for improving the performance on ice have been proposed.

For example, a method for forming the tread portion with a rubber composition containing solid fine particles (inorganic fine particles, non-metal fibers, walnut powder, etc.) has been proposed, and Patent Document 2 discloses a rubber composition for studless tire containing eggshell powder.

Further, Patent Document 3 discloses a rubber composition for studless tire in which a combination of eggshell powder having an average particle size of 20 $\mu$m or less and eggshell powder having an average particle size of 40 to 200 $\mu$m is blended in order to improve the performance on ice while maintaining the wear resistance of the tire.

Further, a pneumatic tire formed by a rubber composition for a tire, in which a non-metal fiber having an average fiber diameter of 15 to 100 $\mu$m and a filler (inorganic fine particles) having two or more protrusions having a length of 0.5 to 3.1 times the average fiber diameter are contained in a diene rubber, is disclosed in Patent Document 4 as a studless tire having excellent performance on ice (friction performance on ice) and not significantly deteriorating wear resistance; and glass fiber is exemplified as the non-metal fiber, and zinc oxide whisker is exemplified as the filler.

Further, it is described in Patent Document 5 and the like that, in the tread pattern shown in FIG. 1 in the same document, the rigidity of the shoulder block portion (hereinafter, referred to as "shoulder portion" and "Sh portion") should be larger than the rigidity of the crown block portion (hereinafter, may be referred to as "center portion" or " Cr portion") in order to prevent one-sided wear of the studless tire. Patent Document 6 discloses a tire wherein the rubber composition of at least the central region of the tread contains bamboo charcoal powder. Patent Document 7 describes a tire wherein the rubber composition of the central portion and both shoulder portions of the tread contains thermally expandable microcapsules and expanded graphite, in different compounding ratios. Patent Document 8 discloses a tire having a tread rubber which includes a crown rubber part and a shoulder rubber part arranged on both sides of the crown rubber part, wherein the crown rubber part is blended with short fibers, while the shoulder rubber part does not include short fibers.

[PRIOR ART DOCUMENTS]

[PATENT DOCUMENT]

[Patent Document 1] JP1999-278015A
[Patent Document 2] JP1994-41355A
[Patent Document 3] JP2007-169500A
[Patent Document 4] JP2009-126968A
[Patent Document 5] JP2009-154791A
[Patent Document 6] JP2006-298215A
[Patent Document 7] JP2008-273436A
[Patent Document 8] JP2000-264015A

[SUMMARY OF INVENTION]

[PROBLEM TO BE SOLVED BY THE INVENTION]

Pneumatic tires, such as studless tires, that require performance on ice, are often mounted on vehicles in advance before the snow season and run on dry roads. This tendency is particularly remarkable in heavy-duty vehicles such as trucks and buses. Moreover, in recent years, even after the end of the snow season, there are many cases where studless tires and the like continue to be used without replacement. However, it has been found that when a tire is used in this way, the appearance of the conventional studless tire or the like as described above may be deteriorated. In particular, the more the filling of solid particles is blended to the rubber composition forming the tread portion, the more easily the appearance is deteriorated.

Since tires are also desired to have a good appearance, deterioration of the appearance is a problem and solving the problem is desired. An object of the present invention is to solve the above-mentioned problems of pneumatic tires such as conventional studless tires. That is, an object is to provide a pneumatic tire in which deterioration of the appearance of the tire is suppressed without impairing the excellent performance on ice and wear resistance of a conventional pneumatic tire such as a studless tire, when traveling on a dry road surface for a long time; and is to provide a method for manufacturing the same.

[MEANS FOR SOLVING THE PROBLEM]

The present inventor has conducted diligent studies for the solution to the above problems and found that the deterioration of the appearance of the tire is mainly caused by wear or loss of the tread end (edge portion of the shoulder portion) of the tread portion (the edge roughness of the shoulder portion) that occurs during running on a dry road surface. Then, it was found that if the product of the particle size and the blending amount (volume fraction) of the solid fine particles blended in the rubber composition forming the center portion of the tread is made larger than the product of the particle size and the blending amount (volume fraction) of the solid fine particles blended in the rubber composition forming the shoulder portion, the edge roughness of the shoulder portion is reduced and the deterioration of the appearance of the tire is suppressed while maintaining the excellent performance on ice. The present invention was thus completed. That is, the above-mentioned object of the present invention is solved by the pneumatic tire having the configuration shown below.

The present invention (the invention of claim 1) is a pneumatic tire having a tread portion comprising a shoulder portion and a center portion, wherein the center portion is formed by a rubber composition A which contains a rubber component A, a reinforcing filler A, and solid fine particles A having an average particle size of 1 pm or more, and the shoulder portion is formed by a rubber composition B which contains a rubber component B and a reinforcing filler B, and contains solid fine particles B having an average particle size of 1 $\mu$m or more, which is characterized by satisfying the following formula,

$$(PB \times RB) \times 2 < PA \times BA$$

wherein PA is the average particle size of the solid fine particles A, RA is the volume fraction of the blending amount of the solid fine particles A to the blending amount of the rubber component A, PE is the average particle size of the solid fine particles B, and RE is the volume fraction of the blending amount of the solid fine particles B to the blending amount of the rubber component B, and the solid fine particles A and the solid fine particles B are one or more selected from the group consisting of eggshells, non-metal fibers, glass fiber, zinc oxide whiskers, rice husks, Shirasu and water-soluble metal salt fine particles, and the average particle size of the solid fine particles B is less than 80 $\mu$m.

Among the pneumatic tires of the present invention, the pneumatic tire (claim 2) characterized by satisfying the formula: $(PB \times RB) \times 3.5 < PA \times BA$ is more preferable, and the pneumatic tire (claim 3) characterized by satisfying the formula: $(PB \times RB) \times 5 < PA \times RA$ is further more preferable.

The invention of claim 4 is the pneumatic tire according to any one of claims 1 to 3, wherein the tire is a studless tire. The pneumatic tire of the present invention is a tire that exhibits excellent performance on ice, and a studless tire is a typical example thereof.

In the pneumatic tire according to the invention, the solid fine particles A and the solid fine particles B are one or more selected from the group consisting of eggshells, non-metal fibers, glass fiber, zinc oxide whiskers, rice husks, Shirasu and water-soluble metal salt fine particles.

The invention of claim 5 is the pneumatic tire according to any one of claims 1 to 4, wherein the solid fine particle A is an eggshell having an average particle size of 80 $\mu$m or more.

The invention of claim 6 is the pneumatic tire according to any one of claims 1 to 4, wherein the solid fine particle A is a glass fiber having an average fiber diameter of 15 $\mu$m or more.

The invention of claim 7 is the pneumatic tire according to any one of claims 1 to 4, wherein the solid fine particle A is a zinc oxide whisker having two or more protrusions and having an average length of the protrusions (average needle-like fiber length) of 15 μm or more.

The invention of claim 8 is the pneumatic tire according to any one of claims 1 to 7, wherein the reinforcing filler A contains carbon black and silica, the blending amounts of the carbon black and the silica in the rubber component A are each 6% by mass or more with respect to the rubber component A, and the total blending amount of the carbon black and silica is 40% by mass or more with respect to the rubber component A.

The invention of claim 9 is the pneumatic tire according to any one of claims 1 to 8, wherein the reinforcing filler B contains carbon black or contains carbon black and silica, the blending amount of the carbon black is 6% by mass or more with respect to the rubber component B, and the total blending amount of the carbon black and silica is 30% by mass or more with respect to the rubber component B.

The invention according to claim 10 is the pneumatic tire according to any one of claims 1 to 9, wherein the rubber component A and the rubber component B are a mixed rubber of natural rubber (NR) and butadiene rubber (BR).

The invention of claim 11 is a method for manufacturing a pneumatic tire according to any one of claims 1 to 10, comprising

a first molding step wherein a side wall is wound around both side portions of a first forming drum, a pair of beads are set at positions corresponding to the Width of the product tire inside the side wall, an innerliner and a ply are pasted to the central portion of the drum, and a rubber strip made of the rubber composition B is wound by a strip wind, on the ply inside the beads, on the side wall outer outside of the beads, or on the outside of the side wall, to form the cover 1;

a tread ring forming step, wherein a breaker and a band are pasted on a second forming drum, and a rubber strip made of the rubber composition A is wound on the band by a strip wind to form a tread ring;

the shaping step, wherein the cover 1 is inserted inside the tread ring and a portion of the cover 1 sandwiched between the beads is inflated to crimping the tread ring and the cover 1; and

a turn-up step, wherein, after the shaping step, the sidewall outside of the bead is folded back toward the bulging side of the cover 1 to paste the sidewall to the side of the cover 1, and

characterized by, in the turn-up step, pasting together the portion of the cover 1 around which the rubber composition B is wound and the portion of the tread ring around which the rubber composition A is wound.

[THE EFFECT OF THE INVENTION]

According to the present invention, a pneumatic tire, particularly a studless tire, which has excellent performance on ice and wear resistance, has less wear and loss on the shoulder portion even when driven on a dry road surface for a long time, and suppresses deterioration of the tire appearance, is provided. The pneumatic tire of the present invention can be easily manufactured by the above-mentioned method for manufacturing a pneumatic tire.

[BRIEF DESCRIPTION OF THE DRAWINGS]

[Fig.1] A development view schematically showing an example of the tread pattern of a studless tire

[Fig.2] A cross-sectional view showing an example of the pneumatic tire of the present invention.

[Fig.3] A diagram schematically showing an example of one step manufacturing the pneumatic tire of the present invention

[Fig.4] A diagram schematically showing another example of one step manufacturing the pneumatic tire of the present invention

[EMBODIMENTS FOR CARRYING OUT THE INVENTION]

Hereinafter, embodiments for carrying out the invention will be described with reference to the drawings.

1. Configuration of pneumatic tire of the present invention

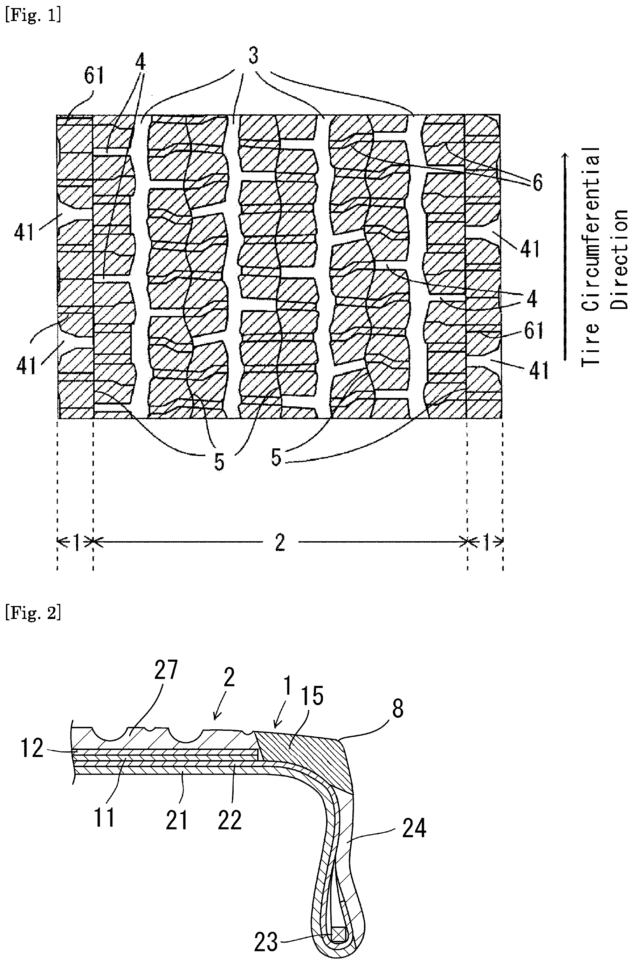

An example of a tread pattern of a studless tire, which is a typical example of the pneumatic tire of the present invention, is shown in FIG. 1. In FIG. 1, the portion indicated by reference numeral 2 is the center portion (Cr portion, crown block portion), and the portions represented by reference numerals 1 on both sides of the center portion 2 are shoulder portions (Sh portion, shoulder block portion).

That is, the shoulder portion means the side portion (edge portion) of the tread portion near the side surface on both sides of the tire, and the center portion means the central portion of the tread portion sandwiched between the shoulder portions. Normally, for each of both sides of the surfaces, the portion having a width of 6% or more and less than 12% of the total width of the tread portion is regarded as the shoulder portion, and the remaining central portion having a width of 76% or more and less than 88% is regarded as the center portion. The same applies to the pneumatic tire of the present invention other than the studless tire.

By forming the shoulder portion and the center portion defined as above using the rubber composition specified in the present invention, excellent performance on ice and wear resistance are obtained, deterioration of the appearance of the tire is suppressed, and the object of the present invention can be achieved. In order to achieve the object, it is preferable that a portion having a width of 8% or more and less than 10% on both side of the tread portion is defined as a shoulder portion, and a portion having a width of 80% or more and less than 84% of the central portion is defined as a center portion.

Various grooves are engraved and various tread patterns are formed in the tread portion of the tire to improve the running performance, maneuverability, driving force, braking performance, straight running stability, grip and drainage of the tire, and to reduce the running resistance. In the example of FIG. 1, a so-called block type pattern is engraved, and a groove substantially perpendicular to the circumferential direction of the tire is engraved on the shoulder portion 1.

As shown in FIG. 1, on the center portion 2, are engraved four main grooves 3 extending continuously in the tire circumferential direction and a plurality of lateral grooves 4 extending across the two main grooves 3 and provided in a lateral direction (a direction substantially perpendicular to the circumferential direction) spaced apart in the tire circumferential direction. The main groove 3 is a wide groove designed for drainage.

A sub groove 5 extending continuously in the tire circumferential direction is formed at a substantially intermediate position between the two main grooves 3 and a position between the center portion 2 and the shoulder portion 1 with a width and groove depth smaller than those of the main groove 3. Further, in order to improve the running performance on ice, on the center portion 2, a siping 6 which is a groove having a width smaller than that of the main groove 3 and the sub groove 5 is formed in a direction perpendicular to the circumferential direction of the tire so as to connect the adjacent main grooves 3 or to connect the main groove 3 and the lateral groove 4.

On the shoulder portion 1, a plurality of lateral grooves 41 provided in the lateral direction at intervals in the tire circumferential direction are engraved. Further, a siping 61 is also formed in the lateral direction.

The tread pattern of the pneumatic tire of the present invention can be the pattern shown in FIG. 1, although it can also be another pattern. The tread pattern of the pneumatic tire of the present invention is not particularly limited, and the optimum pattern is selected in consideration of running performance, braking performance, drainage performance, running resistance, etc., according to the application of the tire.

FIG. 2 is a cross-sectional view showing an example of the pneumatic tire of the present invention which is a studless tire (only the right half is shown because it is symmetrical). In FIG. 2, 1 is a shoulder portion and 2 is a center portion. The shoulder portion 1 is formed of the rubber composition 15 (rubber composition B) for forming the shoulder portion, and the center portion 2 is formed of the rubber composition 27 (rubber composition A) for forming the center portion.

In the studless tire of the example of FIG. 2, two layers of an innerliner and a ply are provided inside the tire in the radial direction. The innerliner and ply are formed in the shape of the tire and are formed on the tread side and the side of the tire. In FIG. 2, 21 represents an innerliner and 22 represents a ply.

A breaker 11 is pasted on the radial outside of the tire on the tread surface side of the ply 22, a band 12 is pasted on the outside of the breaker 11, and a rubber composition 27 (rubber composition A) is further pasted on the outside to form the center portion 2.

A bead 23 is set at the end of the ply 22 (side of the tire), and a sidewall 24 is provided to cover the side of the tire.

The shoulder portion 1 is provided on the outer side of the ply 22 in the tire radial direction so as to be pasted on the ply 22. The shoulder portion 1 is further provided so as to be adhered to the center portion 2 and the sidewall 24. In FIG. 2, 8 represents an edge portion of the shoulder portion 1 (tread).

2. Constituent material of pneumatic tire of the present invention

(1) Constituent material of tread portion

The pneumatic tire of the present invention is characterized by the center portion (2 in FIGs.1 and 2) of the tread portion being formed of the rubber composition A and by the shoulder portion (1 in FIGs. 1 and 2) being formed by the rubber composition B.

A) Material to be blended in rubber compositions A and B

The rubber composition A is composed of a rubber component A, a reinforcing filler A such as carbon black and silica, and solid fine particles A having an average particle size of 1 $\mu$m or more as essential components. The rubber composition B is composed of a rubber component B and a reinforcing filler B such as carbon black as essential components, and further contains solid fine particles B having an average particle size of 1 $\mu$m or more, wherein the average particle size of the solid fine particles B is less than 80 μm. In each of the rubber compositions A and B, in addition to the above-mentioned essential components, other non-essential components can be blended as necessary, in consideration of the characteristics desired for the tire within a range that does not impair the object of the present invention.

(Rubber components A and B)

As the rubber components A and B, diene-based rubber used in the production of conventional studless tires can be used. For example, a type of diene based rubber such as natural rubbers (NR), polyisoprene rubber (IR), various polybutadiene rubbers (BR), various styrene-butadiene copolymer rubbers (SBR), acrylonitrile-butadiene copolymer rubbers (NBR), butyl rubbers, butyl halogenated rubbers and polychloroprene (CR) can be used alone or in combination of two or more types.

Among them, a rubber component blended with natural rubber (NR) and butadiene rubber (BR) is preferable from the viewpoint of good low temperature characteristics and an excellent balance between low temperature characteristics, processability, durability and the like.

The blending ratio of NR in the blend of natural rubber (NR) and butadiene rubber (BR) is preferably 40% by mass or more, more preferably 55% by mass or more, based on the total of NR and BR. Further, 80% by mass or less is preferable, and 70% by mass or less is more preferable. Within the above range, a better low temperature characteristic and an excellent balance between the low temperature characteristic and processability, durability and the like can be obtained.

(Reinforcing filler)

As the reinforcing filler to be filled for reinforcing the tire in the rubber composition forming the tire, carbon black, silica or the like can be mentioned. As the carbon black or silica, carbon black or silica usually used in the manufacture of tires can be used.

As the reinforcing filler A to be blended in the rubber composition A for forming the center portion, those containing both carbon black and silica are preferable. The preferable range of the blending amounts of carbon black and silica in the rubber composition A varies depending on the type of the solid fine particles A, although it is usually preferable that the blending amount of carbon black is 6% by mass or more, the blending amount of silica is 6% by mass or more, and the total blending amount of carbon black and silica is 40% by mass or more, with respect to the blending amount of the rubber component A.

When the solid fine particles A are eggshells and the silica content is 25% by mass or less with respect to the rubber component A, the blending amount of carbon black in the rubber composition A is more preferably 30% by mass or more and further more preferably 50% by mass or more with respect to the rubber component A, from the viewpoint of the strength of the tire (center portion). Further, 80% by mass or less is more preferable, and 60% by mass or less is still more preferable.

The more preferable range of the blending amount of silica in the rubber composition A varies depending on the blending amount of carbon black used in combination and the type of solid fine particles. When the solid fine particles A are eggshells and the content of carbon black is 30% by mass or more with respect to the rubber component A, the blending amount of silica is more preferably 8% by mass or more with respect to the rubber component A. By setting the silica content to 8% by mass or more, the excellent performance on ice required for studless tires in recent years can be obtained. In the above case, the content of silica is more preferably 10% by mass or more, particularly preferably 12% by mass or more, and more excellent performance on ice can be obtained.

On the other hand, for heavy-duty tires used for trucks, buses, etc., when the solid fine particles A are eggshells, the content of silica is preferably 25% by mass or less, more preferably 20% by mass or less, further more preferably 15% by mass or less, with respect to the rubber component A. By setting the content of silica to 25% by mass or less, deterioration of wear performance can be prevented. However, for a low load tire such as a PC tire, wear performance can be ensured even when the content of silica is higher than the above range.

As the reinforcing filler B to be blended in the rubber composition B for forming the shoulder portion, the one containing carbon black is preferable. Further, the rubber composition B may contain silica as a reinforcing filler B. By blending silica, the performance on ice can be further improved.

The blending amount of the carbon black is preferably 6% by mass or more with respect to the rubber component B, and when silica is contained, the total blending amount of the carbon black and silica is preferably 30% by mass or more with respect to the rubber component B.

When the solid fine particles B are eggshells and the blending amount of silica is 20% by mass or less with respect to the rubber component B, the blending amount of carbon black in the rubber composition B is more preferably 30% by mass or more, further more preferably 50% by mass or more with respect to the rubber component B, from the viewpoint of the strength of the tire (shoulder portion), and 80% by mass or less is preferable, 60% by mass or less is more preferable.

When the solid fine particles B are eggshells, the blending amount of silica is preferably 5% by mass or more with respect to the rubber component B from the viewpoint of improving the performance on ice. On the other hand, for heavy-duty tires used for trucks, buses, etc., when the solid fine particles B are eggshells, the blending amount of silica in the rubber composition B is preferably 15% by mass or less, more preferably 10% by mass or less, with respect to the rubber component B, from the viewpoint of preventing deterioration of tire wear performance.

(Solid fine particles A and B)

Solid fine particles mean hard solid fine particles having much greater rigidity than rubber. The solid fine particles A and the solid fine particles B are solid fine particles having an average particle size of 1 $\mu$m or more. From the viewpoint of preventing deterioration of the appearance of the tire, those solid fine particles A having an average particle size of 1000 $\mu$m or less are preferable, and those having an average particle size of 300 $\mu$m or less are more preferable. The solid fine particles B have an average particle size of less than 80 $\mu$m.

Solid fine particles A or B include inorganic fine particles such as glass fiber and zinc oxide whisker; water-soluble metal salt fine particles such as magnesium sulfate and metal salts of lignin sulfonic acid; non-metal fibers such as glass fiber; plant-derived powders obtained from plants such as rice husks; animal-derived powders obtained from animals such as eggshell (eggshell powder) and bone powder; and natural mineral-derived powders such as Shirasu.

Among them, those selected from the group consisting of eggshells, non-metal fibers, glass fiber, inorganic fine particles such as zinc oxide whiskers, rice husks, Shirasu and water-soluble metal salt fine particles are preferable.

From the viewpoint of availability, non-metal fibers such as glass fiber and eggshells such as chicken eggshell powder are preferable.

Further, from the viewpoint of the effect of improving the performance on ice, the inorganic fine particles having two or more, preferably three or more, more preferably four, protrusions as described in Patent Document 4 can be preferably used because it gives an excellent scratching effect on the ice and snow road surface and improves the performance on ice. Examples of the inorganic fine particles having two or more protrusions include zinc oxide whiskers and star sand from Okinawa, and zinc oxide whiskers are particularly preferable.

It is considered that, by blending the solid fine particles A with the rubber composition A, the effect that the solid fine particles A themselves scratch the ice and snow road surface, the effect that the pores formed by falling off the solid fine particles A absorb and remove the water on the ice and snow road surface, and the effect that the edge portion of the pores formed by falling off the solid fine particles A acts as an edge scratching the ice and snow road surface are obtained, and the performance on ice is improved by these effects. When the solid fine particles A are eggshells, the pores existing in the eggshells also have the effect of absorbing and removing water on the ice and snow road surface, which is considered to further contribute to the improvement of the performance on ice.

The pneumatic tire of the present invention is characterized by satisfying the formula: $(PB \times RB) \times 2 < PA \times RA$, wherein the average particle size of the solid fine particles A is PA, the volume fraction of the blending amount of the solid fine particles A to the blending amount of the rubber component A is RA, the average particle size of the solid fine particles B is PB, and the volume fraction of the blending amount of the solid fine particles B to the blending amount of the rubber component B is RB. As described above, excellent performance on ice can be obtained by blending the solid fine particles A in the center portion, and, by satisfying $(PB \times RB) \times 2 < PA \times RA$, deterioration of the appearance of the tire due to wear and loss of the shoulder portion when running on a dry road surface for a long time can be suppressed. That is, it is possible to suppress deterioration of the appearance of the tire while maintaining the excellent performance on ice by blending the solid fine particles.

Here, the average particle size is a value measured using a particle size distribution measuring device. However, in the case of rod-shaped (fibrous) particles such as glass fiber, the average particle size means the average fiber diameter. In the case of inorganic fine particles having two or more protrusions (for example, zinc oxide whiskers), the average particle size means the average needle-like fiber length (average protrusion length).

The volume fraction is the value obtained by formula: $R \times (GD/PD)$, wherein the mass ratio of the blending amount of solid fine particles to the total blending amount of rubber components is R, the density of rubber components is GD, and the density of solid fine particles is PD.

The smaller the ratio of $(PB \times RB)$ to $(PA \times RA)$, the more the deterioration of the appearance of the tire can be suppressed and the excellent performance on ice can be maintained. Therefore, from the viewpoint of suppressing deterioration of the appearance of the tire further and maintaining excellent performance on ice, the studless tires of the present invention satisfying $(PB \times RB) \times 3.5 < PA \times RA$ are more preferable, and those satisfying $(PB \times RB) \times 5 < PA \times RA$ are further more preferable.

When the solid fine particles A are eggshells, the average particle size is preferably 80 $\mu$m or more. Further, the blending amount of the solid fine particles A with respect to the blending amount of the rubber component A is preferably 8% by mass or more. The performance on ice can be further improved by setting the average particle size of the solid fine particles A to 80 µm or more, or setting the blending amount of the solid fine particles A to 8% by mass or more.

The blending amount of the solid fine particles A is more preferably 10% by mass or more, and more excellent performance on ice can be obtained.

When the solid fine particles A are non-metal fibers such as glass fibers, the average particle size (average fiber diameter) is preferably 15 µm or more. Further, the blending amount thereof with respect to the blending amount of the rubber component A is preferably 3% by mass or more. By setting the average particle size to 15 µm or more and the blending amount of the solid fine particles A to 3% by mass or more, the performance on ice can be further improved.

When the solid fine particles A are zinc oxide whiskers having two or more protrusions, the average particle size (average length of protrusions, average needle-like fiber length) is preferably 15 µm or more. Further, the blending amount thereof with respect to the blending amount of the rubber component A is preferably 3% by mass or more. By setting the average particle size to 15 µm or more and the blending amount of the solid fine particles A to 3% by mass or more, the performance on ice can be further improved.

On the other hand, in any of the above cases, the blending amount of the solid fine particles A is preferably 20% by mass or less, more preferably 15% by mass or less, with respect to the blending amount of the rubber component A. By setting the blending amount of the solid fine particles A to 20% by mass or less, deterioration of wear performance (wear resistance) can be prevented.

The solid fine particles B are solid fine particles having an average particle size of less than 80 µm.. By setting the average particle size of the solid fine particles B to less than 80 µm, it is possible to further suppress deterioration of the appearance of the tire while maintaining excellent on-ice performance.

(Non-essential component)

In addition to the above-mentioned essential ingredients, various compounding agents and additives to be blended in conventional rubber compositions for manufacturing studless tires, such as vulcanizing agents (crosslinking agents), vulcanization accelerators, various oils, antiaging agents, softeners, plasticizers, and silane couplings agents can be blended to the rubber compositions A and B within a range that does not impair the object of the present invention. The blending amount of these compounding agents and additives may be a usual amount in the production of conventional studless tires and the like, that is, pneumatic tires that require excellent performance on ice.

When silica is blended, it is preferable to use a silane coupling agent in combination. The blending amount of the silane coupling agent is preferably 1 part by mass or more, more preferably 2 parts by mass or more, and further more preferably 4 parts by mass or more with respect to 100 parts by mass of silica. Further, the amount of the silane coupling agent to be blended is preferably 20 parts by mass or less, more preferably 15 parts by mass or less, and further more preferably 10 parts by mass or less with respect to 100 parts by mass of silica.

B) Production of rubber compositions A and B

Rubber compositions A and B can be obtained by kneading the above-mentioned essential components and non-essential components with a kneader. As the types of kneaders, kneading conditions and the like, the same conditions can be adopted as in the case of manufacturing a rubber composition for forming a tread of a conventional studless tire or the like, that is, a pneumatic tire required to have excellent performance on ice. When the shoulder portion and the center portion are formed by the strip wind described later, the rubber compositions A and B obtained by kneading are molded into a rubber strip by a molding machine. The same molding machine can be used also in this step as the molding machine used for producing the rubber strip used for the conventional strip wind.

(2) Constituent materials of portions other than the tread portion of the pneumatic tire of the present invention

The materials for the innerliner, ply, breaker, band, bead and sidewall, that constitute the pneumatic tire of the present invention, are similar to those of a pneumatic tire required to have excellent performance on ice, such as conventional studless tires. They can be formed by the same method as the conventional method. For example, plies and bands can be formed by the strip wind method.

3. Method for manufacturing a pneumatic tire of the present invention

(1) Outline

The pneumatic tire of the present invention can be produced by a method having a step of winding a rubber strip made of a rubber composition B by a strip wind to form a portion B constituting a shoulder portion, a step of winding a rubber strip made of the rubber composition A by a strip wind to form a portion A constituting a center portion and a step of integrating the portion A and the portion B.

(2) Examples of preferable manufacturing method

Among them, a method of manufacturing according to the method described in JP-A-2016-088030 or JP-A-2016-088031 is preferable. That is, preferable is a manufacturing method which comprises

the first molding step wherein a side wall is wound around both side portions of the first forming drum, a pair of beads are set at positions corresponding to the width of the product tire inside the side wall, an innerliner and a ply are pasted to the central portion of the drum, and a rubber strip made of the rubber composition B is wound by a strip wind, on the ply inside the beads (as in the method described in JP2016-088031), on the side wall outer outside of the beads (as in the method described in JP2016-088030), or on the outside of the side wall, to form the cover 1;

the tread ring forming step, wherein a breaker and a band are pasted on the second forming drum, and a rubber strip made of the rubber composition A is wound on the band by a strip wind to form a tread ring;

the shaping step, wherein the cover 1 is inserted inside the tread ring and the portion of the cover 1 sandwiched between the beads is inflated to crimping the tread ring and the cover 1; and

a turn-up step, wherein, after the shaping step, the sidewall outside of the bead is folded back toward the bulging side of the cover 1 to paste the sidewall to the side of the cover 1, and

is characterized by, in the turn-up step, pasting together the portion of the cover 1 (portion B) around which the rubber composition B is wound and the portion of the tread ring (portion A) around which the rubber composition A is wound.

Hereinafter, an example of each process of this manufacturing method will be described with reference to the drawings.

(3) First molding process

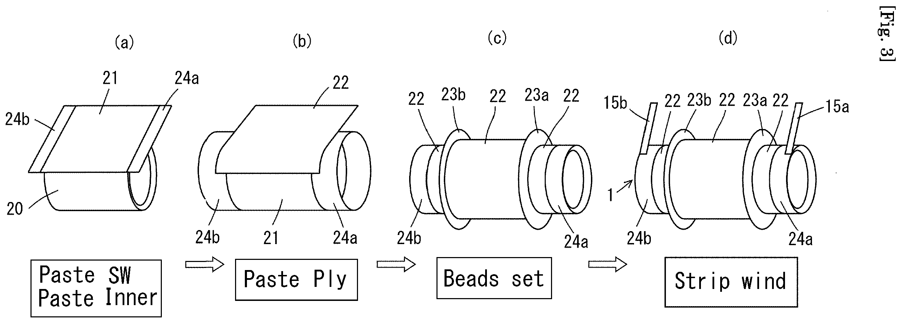

FIG. 3 is a diagram schematically showing an example of the first molding step. In the example of FIG. 3, first, sidewalls (SW) 24a and 24b are wound around both side portions of the first forming drum 20, and a sheet-shaped innerliner 21 is pasted on the central portion of the first forming drum 20 ((a) in FIG. 3), and then the ply 22 is pasted on the inner 21 ((b) in FIG. 3).

Next, a pair of beads 23a and 23b are set inside the sidewalls 24a and 24b on both sides, at an interval according to the width of the product tire ((c) in FIG. 3). Then, the rubber strips 15a and 15b made of the rubber composition B are spirally wound on the sidewalls 24a and 24b on the outer side of the beads 23a and 23b by a strip wind ((d) in FIG. 3) to form the portion B to be the shoulder portion 1, and molding of the cover 1 is completed.

In the example of FIG. 3, the bead is set before the strip wind of the rubber composition B, but the bead may be set after the strip wind.

Further, instead of winding the rubber strips 15a and 15b made of the rubber composition B on the sidewalls 24a and 24b on the outer sides of the beads 23a and 23b, a method wherein the rubber strips 15a and 15b are wound on the outer sides of the sidewalls 24a and 24b, respectively, or are wound on the ply 22 inside the beads 23a and 23b can also be adopted.

(4) Tread ring forming process

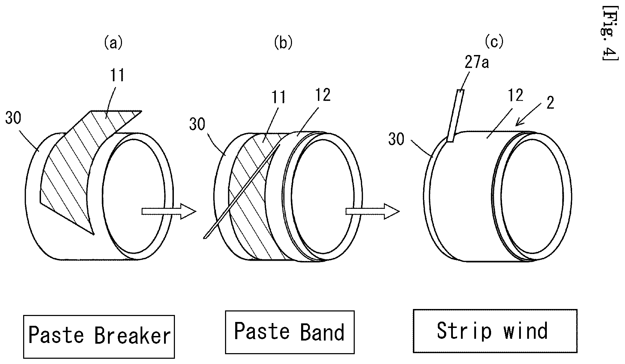

As shown in FIG. 4, first, a sheet-shaped breaker 11 is wound around and pasted on the second forming drum 30 ((a) in FIG. 4). Then, a band 12 is formed on the breaker 11 using a strip wind ((b) in FIG. 4).

Next, the rubber strip 27a made of the rubber composition A is spirally wound on the band 12 by a strip wind ((c) in FIG. 4) to form a portion A (central portion) to be the center portion 2, and molding of the tread ring is completed.

(5) Shaping step

In the shaping step, first, inside the cylindrical tread ring, which was formed in the tread ring forming step and obtained by pulling out the second forming drum 30, the cover 1, which was formed in the first molding step and obtained by pulling out the first forming drum 20, is inserted and they are combined.

Next, the portion between the beads 23a and 23b of the cover 1 is inflated to crimp the tread ring and the cover 1 and the whole is formed into a low cover shape.

(6) Turn-up step

The sidewalls 24a and 24b each respectively on the outer sides of the beads 23a and 23b are folded back and pasted toward the side surface of the cover 1 inflated in the shaping step. In this turn-up process, the portion B that becomes the shoulder portion 1 of the cover 1 and the portion A that becomes the center portion 2 of the tread ring are pasted together to form a tread, and production of the low cover for manufacturing the pneumatic tire of the present invention is completed.

(7) Vulcanization

The pneumatic tire of the present invention is produced by vulcanizing the produced low cover with a tire vulcanizer. As the vulcanization method, conditions, etc., the same methods and conditions as those for manufacturing a conventional studless tire can be adopted.

4. Applications of the pneumatic tire of the present invention

The pneumatic tire of the present invention has excellent performance on ice and excellent wear resistance and it is less likely to cause wear or loss of the shoulder portion of the tread (the edge roughness of the shoulder portion), and the deterioration of the tire appearance is suppressed even when running on a dry road surface for a long time. Therefore, it is preferably used as a pneumatic tire such as a studless tire and it is particularly preferably used as a studless tire for heavy vehicles such as buses and trucks.

[EXAMPLES]

Hereinafter, the present invention and specific embodiments thereof will be described in more detail based on Examples. The tires of Examples 3 to 9, 15, and 17 are not according to the invention.

1. Raw materials used in Examples and Comparative examples

The raw materials used in Examples and Comparative examples are summarized below. Some raw materials are indicated by abbreviations in Tables 1-3, the abbreviations are shown in parentheses at the end of the description for each raw material.

- Natural rubber: RSS # 3 (NR)
- Butadiene rubber: Butadiene rubber (BR150B) (BR) manufactured by Ube Industries, Ltd.
- Carbon black 1: Fine particle carbon produced by the following (Example of carbon black production): average particle size 16 nm, CTAB 158 $m^2$/g, $N_2$SA 170 $m^2$/g, IA 145 mg/g, CTAB/IA 1.09, DBP absorption amount 138 $cm^3$/100g (CB1)

(Example of carbon black production)

Using a carbon black reactor in which a combustion zone having inner diameter of 800 mm and length of 1600 mm and equipped with an air introduction duct and a combustion burner, a raw material introduction zone connected from the combustion zone and consisting of narrow diameter part having inner diameter of 145 mm and length of 1000 mm connected from the periphery through a raw material nozzle and a rear reaction zone equipped with a quenching device having inner diameter of 400 mm and length of 3000 mm are sequentially joined, using an C heavy oil as fuel and creosort oil as raw material hydrocarbon, Carbon black 1 was manufactured.

- Silica: Silica manufactured by Evonik Ultrasil VN3 ($N_2$SA 175$m^2$/g)
- Solid fine particles

    -- Chicken eggshell powder
    --- Chicken eggshell powder: average particle size, 10 $\mu$m, manufactured by Kewpie Corporation (egg shell 10 $\mu$m)
    --- Chicken eggshell powder: average particle size, 50 $\mu$m, manufactured by Kewpie Corporation (egg shell 50 $\mu$m)
    --- Chicken eggshell powder: average particle size, 100 $\mu$m, manufactured by Green Techno (egg shell 100 $\mu$m)
    -- Glass fiber: Glass fiber manufactured by Nippon Sheet Glass Co., Ltd. (average fiber diameter: 33 $\mu$m, cut length (average fiber length): 3 mm)

-- Zinc oxide whisker: Pana-tetra prototype manufactured by AMTEC Co., Ltd. (Tetrapot-shaped zinc oxide, number of protrusions: 4, average protrusion length (average needle-shaped fiber length): 33 μm, opening angle of adjacent protrusions θ: 109.5 degrees)

- Terpene resin: YS resin PX800 manufactured by Yasuhara Chemical Co., Ltd.
- Farnesene resin: Farnesene-butadiene copolymer manufactured by Kuraray Co., Ltd. FBR-746 (Mw: 100,000, mass-based copolymerization ratio: farnesene/butadiene = 60/40, Melt viscosity: 603 Pa ·s, Tg: -78 °C)
- Silane coupling agent: Si69 (bis(3-triethoxysilylpropyl)tetrasulfide) manufactured by Degussa Co., Ltd.
- Oil: Diana process Oil PS32 manufactured by Idemitsu Kosan Co., Ltd.
- Sulfur: Powdered sulfur manufactured by Tsurumi Chemical Industry Co., Ltd.
- Vulcanization accelerator:

-- 1,3-Diphenylguanidine (accelerator DPG)
-- N-tert-butyl-2-benzothiazolylsulfenamide (accelerator CZ) manufactured by Ouchi Shinko Chemical Industry Co., Ltd.

2. Production of Studless Tires

(1) Examples

Chemicals other than sulfur and vulcanization accelerator were blended according to the blending amounts shown in Tables 1 and 2, and kneaded at about 150 °C for 5 minutes using a Banbury mixer. Then, sulfur and a vulcanization accelerator were added to the obtained kneaded product according to the blending amounts shown in Tables 1 and 2, and kneaded with a twin-screw open roll at about 80 °C for 5 minutes to obtain an unvulcanized rubber composition (Formulation example).

The unvulcanized rubber composition thus obtained was used in the shoulder portion (Sh portion) and the center portion (Cr portion) in the combinations shown in Tables 1 and 2, and a tread shape was formed by strip wind and pasted to other tire members, according to the methods described in (2) to (6) of "3. Method for manufacturing a pneumatic tire of the present invention". Then, by vulcanizing at 150 °C and 25 kgf for 35 minutes, studless tires for trucks and buses (Examples 1 to 9: tire size 11R22.5) and PC studless tires (Examples 10 to 17: tire size 195/65R14) were manufactured and used in the following tests.

(2) Comparative Examples

An unvulcanized rubber composition (blending example) was obtained in the same manner as in Examples except that the blending amount shown in Table 3 was adopted instead of the blending amounts shown in Tables 1 and 2. A tread shape was formed by strip wind and pasted to other tire members in the same manner as in the examples except that the obtained unvulcanized rubber composition was used for both the shoulder portion (Sh portion) and the center portion (Cr portion). Then, by vulcanizing at 150 °C and 25 kgf for 35 minutes, studless tires for trucks and buses (Comparative Examples 1 to 5: tire size 11R22.5) and PC studless tires (Comparative Examples 6 to 12: tire size 195/65R14) were manufactured, and used in the following tests.

3. Evaluation contents

(Performance on ice)

The studless tires obtained from the above production of the studless tires were mounted on a 2-D vehicle, and after running-in on a dry road surface for 300 km, the traveled distance required to reach a speed of 10 km/h from a stopped state was measured at a temperature of 0 °C on Hokkaido Nayoro test course. The reciprocal of the measured distance was expressed as a ratio (index) with the reciprocal of the distance of Comparative Example 1 as 100, and the index was used as the performance on ice index. The obtained performance on ice index is shown in the column of "Performance on ice" in Tables 1-7. The larger the performance on ice index is, the better the performance on ice is.

(Rubber compound wear performance (wear resistance))

Test pieces with a thickness of 5 mm were cut out from the shoulder portion (Sh portion) and center portion (Cr portion) of the tread portion of the studless tire obtained in the manufacture of the studless tire. Using a ramborn wear tester manufactured by Iwamoto Seisakusho Co., Ltd., the amount of wear was measured at a surface rotation speed of 50 m/min, a load of 3.0 kg, a amount of falling sand of 15 g/min, and a slip rate of 20%. The reciprocal of the measured amount of wear is expressed by the ratio (index) with the reciprocal of the amount of wear of Comparative Example 1 (Formulation Example 1) as 100, and is shown in the column of "Rubber compound wear performance" in Tables 1-7. The larger this index is, the better the wear resistance is.

(Appearance performance)

The studless tire obtained in the manufacture of the studless tire were mounted on the same 2-D vehicle as described above, and after running 300 km on a dry road surface, the appearances of the shoulder portion (Sh portion) and the center portion (Cr portion) of the tread were confirmed with the naked eye. If no change in appearance is visible on either the shoulder portion or center portion, set it (appearance performance) to 120; if there is almost no change in the block shape of the shoulder, set it to 100; if wear is seen on the edge of the block on the shoulder, set it to 80; and when the appearance is significantly deteriorated due to wear on almost the entire upper surface and side surface of the block, set it to 60. When the change in appearance is in the middle of each of the above cases, the value is in the middle of the values in each case to express the appearance performance. The results are shown in the "Appearance performance" column of Tables 1-7.

(Actual vehicle wear performance)

The studless tires obtained in the manufacture of the studless tire were mounted on the same 2-D vehicle as described above, and after running 10,000 km on a dry road surface, the amount of wear in the center portion was measured. The measurement was performed on both sides of the tire equator and at 6 locations in the tire circumferential direction, and the average value thereof was calculated. Then, the reciprocal of the calculated average value is expressed by a ratio (index) with the reciprocal of the average value of Comparative Example 1 as 100, and is shown in the column of "Actual vehicle wear performance" in Tables 1-7. The larger this index is, the better the actual vehicle wear performance is.

4. Experimental results

The experimental results are shown in Tables 1-7.

[Table 1]

| Portion | Example 1 | | Example 2 | | Example 3 | | Example 4 | |
|---|---|---|---|---|---|---|---|---|
| | Sh Portion | Cr Portion | Sh Portion | C r Portion | Sh Portion | C r Portion | Sh Portion | C r Portion |
| Formulation No. | 1 | 2 | 1 | 3 | 4 | 3 | 5 | 3 |
| N R | 60 | 60 | 60 | 60 | 60 | 60 | 60 | 60 |
| B R | 40 | 40 | 40 | 40 | 40 | 40 | 40 | 40 |
| C B 1 | 50 | 56 | 50 | 56 | 56 | 56 | 50 | 56 |
| Silica | - | 14 | - | 14 | 14 | 14 | 12 | 14 |
| Eggshell 10$\mu$m | 8 (4.3) | - | 8 (4.3) | - | - | - | - | - |
| Eggshell 50$\mu$m | 4 (1.9) | - | 4 (1.9) | - | - | - | - | - |
| Eggshell 100$\mu$m | - | 12 (5.17) | - | 12 (5.17) | 4 (1.72) | 12 (5.17) | - | 12 (5.17) |
| Terpene resin | - | 6 | - | 10 | 10 | 10 | 6 | 10 |
| Farnesene resin | - | - | - | 6 | 12 | 6 | - | 6 |
| Oil | - | 13 | - | 3 | - | 3 | - | 3 |
| Sulfur | 1 | 1 | 1 | 1 | 1 | 1 | 1 | 1 |
| Accelerator CZ | 1 | 1 | 1 | 1 | 1 | 1 | 1.4 | 1 |
| *1 | 280 | 1200 | 280 | 1200 | 400 | 1200 | 0 | 1200 |
| *2 | 138 | 517 | 138 | 517 | 172 | 517 | 0 | 517 |
| Performance on ice | 120 | | 125 | | 130 | | 125 | |

(continued)

| Portion | Example 1 | | Example 2 | | Example 3 | | Example 4 | |
|---|---|---|---|---|---|---|---|---|
| | Sh Portion | Cr Portion | Sh Portion | C r Portion | Sh Portion | C r Portion | Sh Portion | C r Portion |
| Rubber compound wear performance | 100 | 100 | 100 | 107 | 120 | 107 | 130 | 107 |
| Actual vehicle wear performance | 100 | | 105 | | 115 | | 125 | |
| Appearance performance | 100 | | 100 | | 80 | | 120 | |

• The numerical values of the formulations in the table represent parts by mass.
• The numbers in parentheses in the table indicate the volume fraction (%) of solid fine particles (eggshells) with respect to the rubber component (NR + BR).
* 1 in the table is the value of "average particle size ($\mu$m) x blending amount (parts by mass) of solid fine particles".
* 2 in the table is the value of "average particle size ($\mu$m) x volume fraction(%) of solid fine particles".

[Table 2]

| Portion | Example 5 | | Example 6 | | Example 7 | | Example 8 | | Example 9 | |
|---|---|---|---|---|---|---|---|---|---|---|
| | Sh Portion | Cr Portion | Sh Portion | Cr Portion | Sh Portion | Cr Portion | Sh Portion | Cr Portion | Sh Portion | Cr Portion |
| Formulation No. | 5 | 9 | 5 | 10 | 5 | 11 | 7 | 3 | 8 | 3 |
| N R | 60 | 60 | 60 | 60 | 60 | 60 | 60 | 60 | 60 | 60 |
| B R | 40 | 40 | 40 | 40 | 40 | 40 | 40 | 40 | 40 | 40 |
| C B 1 | 50 | 56 | 50 | 56 | 50 | 56 | 56 | 56 | 50 | 56 |
| Silica | 12 | 8 | 12 | 25 | 12 | 14 | - | 14 | - | 14 |
| Eggshell 10$\mu$m | - | - | - | - | - | - | - | - | - | - |
| Eggshell 50$\mu$m | - | - | - | - | - | - | - | - | - | - |
| Eggshell 100$\mu$m | - | 12 (5.17) | - | 12 (5.17) | - | 5 (2.16) | 4 (1.72) | 12 (5.17) | - | 12 (5.17) |
| Terpene resin | 6 | 10 | 6 | 10 | 6 | 10 | 10 | 10 | 6 | 10 |
| Farnesene resin | - | 6 | - | 6 | - | 6 | 12 | 6 | - | 6 |
| Oil | - | 3 | - | 3 | - | 3 | - | 3 | - | 3 |
| Sulfur | 1 | 1 | 1 | 1 | 1 | 1 | 1 | 1 | 1 | 1 |
| Accelerator CZ | 1.4 | 1 | 1.4 | 1 | 1.4 | 1 | 1 | 1 | 1.4 | 1 |
| *1 | 0 | 1200 | 0 | 1200 | 0 | 500 | 400 | 1200 | 0 | 1200 |
| *2 | 0 | 517 | 0 | 517 | 0 | 216 | 172 | 517 | 0 | 517 |
| Performance on ice | 120 | | 125 | | 115 | | 128 | | 125 | |
| Rubber compound wear performance | 130 | 110 | 130 | 100 | 130 | 125 | 130 | 107 | 140 | 107 |

(continued)

|  | Example 5 | | Example 6 | | Example 7 | | Example 8 | | Example 9 | |
|---|---|---|---|---|---|---|---|---|---|---|
| Portion | Sh Portion | Cr Portion | Sh Portion | Cr Portion | Sh Portion | Cr Portion | Sh Portion | Cr Portion | Sh Portion | Cr Portion |
| Actual vehicle wear performance | 115 | | 105 | | 127 | | 120 | | 120 | |
| Appearance performance | 120 | | 120 | | 130 | | 80 | | 120 | |

- The numerical values of the formulations in the table represent parts by mass.
- The numbers in parentheses in the table indicate the volume fraction(%) of solid fine particles (eggshells) with respect to the rubber component (NR + BR).
* 1 in the table is the value of "average particle size ($\mu$m) x blending amount (parts by mass) of solid fine particles".
* 2 in the table is the value of "average particle size ($\mu$m) x volume fraction(%) of solid fine particles".

[Table 3]

|  | Comparative Example 1 | | Comparative Exampl e 2 | | Comparative Example 3 | | Comparative Example 4 | | Comparative Example 5 | |
|---|---|---|---|---|---|---|---|---|---|---|
| Portion | Sh Portion | Cr Portion | Sh Portion | Cr Portion | Sh Portion | Cr Portion | Sh Portion | Cr Portion | Sh Portion | Cr Portion |
| Formulation No. | 1 | | 2 | | 6 | | 4 | | 5 | |
| N R | 60 | | 60 | | 70 | | 60 | | 60 | |
| B R | 40 | | 40 | | 30 | | 40 | | 40 | |
| C B 1 | 50 | | 56 | | 50 | | 56 | | 50 | |
| Silica | - | | 14 | | - | | 14 | | 12 | |
| Eggshell 10$\mu$m | 8 (4. 3) | | - | | - | | - | | - | |
| Eggshell 50$\mu$m | 4 (1. 9) | | - | | - | | - | | - | |
| Eggshell 100$\mu$m | - | | 12 (5. 17) | | - | | 4 (1. 72) | | - | |
| Terpene resin | - | | 6 | | - | | 10 | | 6 | |
| Farnesene resin | - | | - | | - | | 12 | | - | |
| Oil | - | | 13 | | - | | - | | - | |
| Sulfur | 1 | | 1 | | 1 | | 1 | | 1 | |
| Accelerator CZ | 1 | | 1 | | 1.5 | | 1 | | 1.4 | |
| *1 | 280 | 280 | 1200 | 1200 | 0 | 0 | 400 | 400 | 0 | 0 |
| * 2 | 138 | 138 | 517 | 517 | 0 | 0 | 172 | 172 | 0 | 0 |
| Performance on ice | 100 | | 125 | | 90 | | 95 | | 95 | |
| Rubber compound wear performance | 100 | | 100 | | 140 | | 120 | | 130 | |

(continued)

| Portion | Comparative Example 1 | | Comparative Exampl e 2 | | Comparative Example 3 | | Comparative Example 4 | | Comparative Example 5 | |
|---|---|---|---|---|---|---|---|---|---|---|
| | Sh Portion | Cr Portion | Sh Portion | Cr Portion | Sh Portion | Cr Portion | Sh Portion | Cr Portion | Sh Portion | Cr Portion |
| Actual vehicle wear perfor- mance | 100 | | 100 | | 140 | | 120 | | 130 | |
| Appearance performance | 100 | | 60 | | 120 | | 100 | | 120 | |

• The numerical values of the formulations in the table represent parts by mass.
• The numbers in parentheses in the table indicate the volume fraction(%) of solid fine particles (eggshells) with respect to the rubber component (NR + BR).
* 1 in the table is the value of "average particle size ($\mu$m) x blending amount (parts by mass) of solid fine particles".
* 2 in the table is the value of "average particle size ($\mu$m) x volume fraction(%) of solid fine particles".

[Table 4]

| Portion | Example 1 0 | | Example 1 1 | | Example 1 2 | | Example 1 3 | |
|---|---|---|---|---|---|---|---|---|
| | Sh Portion | Cr Portion | Sh Portion | Cr Portion | Sh Portion | Cr Portion | Sh Portion | Cr Portion |
| Formulation No. | 12 | 14 | 12 | 15 | 12 | 17 | 12 | 18 |
| N R | 60 | 60 | 60 | 60 | 60 | 60 | 60 | 60 |
| BR | 40 | 40 | 40 | 40 | 40 | 40 | 40 | 40 |
| CB1 | 10 | 10 | 10 | 10 | 10 | 10 | 10 | 10 |
| Silica | 50 | 50 | 50 | 50 | 50 | 50 | 50 | 50 |
| Eggshell 10$\mu$m | 7.5 (3.8) | - | 7.5 (3.8) | - | 7.5 (3.8) | - | 7.5 (3.8) | - |
| Glass fiber | - | 4(2.0) | - | 8(4.0) | - | - | - | - |
| Zinc oxide whisker | - | - | - | - | - | 4(2.0) | - | 8(4.0) |
| Silane couplings agent | 2. 5 | 2.5 | 2.5 | 2.5 | 2.5 | 2.5 | 2.5 | 2.5 |
| Oil | 40 | 40 | 40 | 40 | 40 | 40 | 40 | 40 |
| Sulfur | 1 | 1 | 1 | 1 | 1 | 1 | 1 | 1 |
| Accelerator DPG | 2 | 2 | 2 | 2 | 2 | 2 | 2 | 2 |
| Accelerator CZ | 2 | 2 | 2 | 2 | 2 | 2 | 2 | 2 |
| *1 | 75 | 132 | 75 | 264 | 75 | 132 | 75 | 264 |
| * 2 | 38 | 66 | 38 | 132 | 38 | 66 | 38 | 132 |
| Performance on ice | 108 | | 117 | | 126 | | 135 | |
| Rubber compound wear performance | 100 | 95 | 100 | 90 | 100 | 85 | 100 | 80 |
| Actual vehicle wear performance | 97 | | 93 | | 90 | | 87 | |

(continued)

| Portion | Example 10 | | Example 11 | | Example 12 | | Example 13 | |
|---|---|---|---|---|---|---|---|---|
| | Sh Portion | Cr Portion | Sh Portion | Cr Portion | Sh Portion | Cr Portion | Sh Portion | Cr Portion |
| Appearance performance | 100 | | 100 | | 100 | | 100 | |

- The numerical values of the formulations in the table represent parts by mass.
- The numbers in parentheses in the table indicate the volume fraction(%) of solid fine particles (eggshells, Glass fiber, Zinc oxide whisker) with respect to the rubber component (NR + BR).
* 1 in the table is the value of "average particle size ($\mu$m) x blending amount (parts by mass) of solid fine particles".
* 2 in the table is the value of "average particle size ($\mu$m) x volume fraction (%) of solid fine particles".

[Table 5]

| Portion | Example 14 | | Example 15 | | Example 16 | | Example 17 | |
|---|---|---|---|---|---|---|---|---|
| | Sh Portion | Cr Portion | Sh Portion | Cr Portion | Sh Portion | Cr Portion | Sh Portion | Cr Portion |
| Formulation No. | 13 | 15 | 19 | 15 | 16 | 18 | 19 | 18 |
| N R | 60 | 60 | 60 | 60 | 60 | 60 | 60 | 60 |
| B R | 40 | 40 | 40 | 40 | 40 | 40 | 40 | 40 |
| CB1 | 10 | 10 | 10 | 10 | 10 | 10 | 10 | 10 |
| Silica | 50 | 50 | 50 | 50 | 50 | 50 | 50 | 50 |
| Glass fiber | 2(1.0) | 8(4.0) | - | 8(4.0) | - | - | - | - |
| Zinc oxide whisker | - | - | - | - | 2(1.0) | 8(4.0) | - | 8(4.0) |
| Silane couplings agent | 2.5 | 2.5 | 2.5 | 2.5 | 2.5 | 2.5 | 2.5 | 2.5 |
| Oil | 40 | 40 | 40 | 40 | 40 | 40 | 40 | 40 |
| Sulfur | 1 | 1 | 1 | 1 | 1 | 1 | 1 | 1 |
| Accelerator DPG | 2 | 2 | 2 | 2 | 2 | 2 | 2 | 2 |
| Accelerator CZ | 2 | 2 | 2 | 2 | 2 | 2 | 2 | 2 |
| *1 | 66 | 264 | 0 | 264 | 66 | 264 | 0 | 264 |
| *2 | 33 | 132 | 0 | 132 | 33 | 132 | 0 | 132 |
| Performance on ice | 117 | | 115 | | 120 | | 118 | |
| Rubber compound wear performance | 110 | 90 | 130 | 90 | 105 | 80 | 130 | 80 |
| Actual vehicle wear performance | 97 | | 108 | | 94 | | 103 | |
| Appearance performance | 110 | | 120 | | 105 | | 120 | |

- The numerical values of the formulations in the table represent parts by mass.
- The numbers in parentheses in the table indicate the volume fraction(%) of solid fine particles (Glass fiber, Zinc oxide whisker) with respect to the rubber component (NR + BR).
* 1 in the table is the value of "average particle size ($\mu$m) x blending amount (parts by mass) of solid fine particles".
* 2 in the table is the value of "average particle size ($\mu$m) x volume fraction(%) of solid fine particles".

[Table 6]

| Portion | Comparative Example 6 | | Comparative Example 7 | | Comparative Example 8 | | Comparative Example 9 | |
|---|---|---|---|---|---|---|---|---|
| | Sh Portion | Cr Portion | Sh Portion | Cr Portion | Sh Portion | Cr Portion | Sh Portion | Cr Portion |
| Formulation No. | 12 | | 13 | | 14 | | 15 | |
| N R | 60 | | 60 | | 60 | | 60 | |
| BR | 40 | | 40 | | 40 | | 40 | |
| CB1 | 10 | | 10 | | 10 | | 10 | |
| Silica | 50 | | 50 | | 50 | | 50 | |
| Eggshell 50μm | 7.5(3.8) | | - | | - | | - | |
| Glass fiber | - | | 2(1.0) | | 4(2.0) | | 8(4.0) | |
| Zinc oxide whisker | 2. 5 | | 2. 5 | | 2.5 | | 2.5 | |
| Oil | 40 | | 40 | | 40 | | 40 | |
| Sulfur | 1 | | 1 | | 1 | | 1 | |
| Accelerator DPG | 2 | | 2 | | 2 | | 2 | |
| Accelerator CZ | 2 | | 2 | | 2 | | 2 | |
| *1 | 75 | 75 | 66 | 66 | 132 | 132 | 264 | 264 |
| * 2 | 38 | 38 | 33 | 33 | 66 | 66 | 132 | 132 |
| Performance on ice | 100 | | 100 | | 110 | | 120 | |
| Rubber compound wear performance | 100 | | 100 | | 95 | | 90 | |
| Actual vehicle wear performance | 100 | | 100 | | 95 | | 90 | |
| Appearance performance | 100 | | 100 | | 95 | | 90 | |

• The numerical values of the formulations in the table represent parts by mass.
• The numbers in parentheses in the table indicate the volume fraction(%) of solid fine particles (Eggshell, Glass fiber) with respect to the rubber component (NR + BR).
* 1 in the table is the value of "average particle size (μm) × blending amount (parts by mass) of solid fine particles".
* 2 in the table is the value of "average particle size (μm) x volume fraction(%) of solid fine particles".

[Table 7]

| Portion | Comparative Example 10 | | Comparative Example 11 | | Comparative Example 12 | |
|---|---|---|---|---|---|---|
| | Sh Portion | Cr Portion | Sh Portion | Cr Portion | Sh Portion | Cr Portion |
| Formulation No. | 16 | | 17 | | 18 | |
| N R | 60 | | 60 | | 60 | |
| B R | 40 | | 40 | | 40 | |
| CB1 | 10 | | 10 | | 10 | |
| Silica | 50 | | 50 | | 50 | |
| Zinc oxide whisker | 2(1.0) | | 4(2.0) | | 8(4.0) | |
| Silane couplings agent | 2.5 | | 2.5 | | 2.5 | |

(continued)

| Portion | Comparative Example 10 | | Comparative Example 11 | | Comparative Example 12 | |
|---|---|---|---|---|---|---|
| | Sh Portion | Cr Portion | Sh Portion | Cr Portion | Sh Portion | Cr Portion |
| Oil | 40 | | 40 | | 40 | |
| Sulfur | 1 | | 1 | | 1 | |
| Accelerator DPG | 2 | | 2 | | 2 | |
| Accelerator CZ | 2 | | 2 | | 2 | |
| *1 | 66 | 66 | 132 | 132 | 264 | 264 |
| * 2 | 33 | 33 | 66 | 66 | 132 | 132 |
| Performance on ice | 120 | | 130 | | 140 | |
| Rubber compound wear performance | 90 | | 85 | | 80 | |
| Actual vehicle wear performance | 90 | | 85 | | 80 | |
| Appearance performance | 90 | | 85 | | 80 | |

- The numerical values of the formulations in the table represent parts by mass.
- The numbers in parentheses in the table indicate the volume fraction(%) of solid fine particles (Zinc oxide whisker) with respect to the rubber component (NR + BR).
- * 1 in the table is the value of "average particle size ($\mu$m) x blending amount (parts by mass) of solid fine particles".
- * 2 in the table is the value of "average particle size ($\mu$m) x volume fraction(%) of solid fine particles".

As shown from the results in Tables 1, 2, 4 and 5, in Examples 1 to 17 in which the value of the average particle size ($\mu$m) (PB) $\times$ volume fraction (%) (RB) of the solid fine particles B in the shoulder portion is smaller than the values of average particle size ($\mu$m) (PA) $\times$ volume fraction (%) (RA) of the solid fine particles A in the center portion, excellent performance on ice (index 108 or more) is obtained and regarding tire appearance (appearance performance), the index is 80 or more and deterioration of the appearance due to running is suppressed. That is, the appearance performance is also excellent.

In particular, in Examples 1, 2, 4-7, 9 and 14-17 in which PB $\times$ RB is less than 1/3.5 of PA $\times$ RA, more excellent appearance performance (index of 100 or more) is obtained. Among them, in Examples 4-7, 9, 15 and 17 in which PB $\times$ RB is less than 1/5 of PA $\times$ RA, further excellent appearance performance (index 120 or more) is obtained.

On the other hand, in Comparative examples 1-12, in which the center portion and the shoulder portion are formed of a rubber composition having the same composition, and the values of the average particle size ($\mu$m) $\times$ volume fraction (%) of the solid fine particles are the same between the center portion and the shoulder portion, one of the performance on ice, the wear resistance performance and the appearance performance is insufficient, and the effect of the present invention that the appearance performance is excellent while maintaining the excellent performance on ice and the wear resistance performance is not obtained.

That is, in Comparative examples 1 and 6 in which eggshells having a relatively small average particle size were blended, Comparative example 4 in which the blending amount of eggshell was small, and Comparative example 7 in which the blending amount of glass fiber was small, the appearance performance was an index of 100 and the performance on ice was an index of 100 or less than 100; and in Comparative examples 3 and 5 in which the center portion and the shoulder portion are formed by using a rubber composition containing no solid fine particles, the performance on ice was low (index less than 100), although the appearance performance is excellent (index 120 or more). That is, none of them has the performance on ice desired for current studless tires. On the other hand, in Comparative example 2 in which the center portion and the shoulder portion were formed by using a rubber composition having an average particle size ($\mu$m) $\times$ volume fraction (%) of more than 500, the appearance performance was low (index 60) although the performance on ice was excellent, and the appearance of the tire is significantly deteriorated when running on a dry road surface for a long time.

Further, in Comparative example 8-12, in which the center portion and the shoulder portion were formed by using a rubber composition containing 4% by mass or more of glass fiber or 2% by mass or more of zinc oxide whiskers, although excellent performance on ice was obtained, the appearance performance and the wear resistance performance are low, and the object of the present invention is not sufficiently achieved.

[DESCRIPTION OF THE REFERENCE NUMERALS]

| | |
|---|---|
| 1 | Shoulder portion |
| 2 | Center portion |
| 3 | Main groove |
| 4, 41 | Lateral grooves |
| 5 | Sub groove |
| 6, 61 | Siping |
| 8 | Edge (of shoulder portion) |
| 11 | Breaker |
| 12 | Band |
| 15 | Rubber composition for forming shoulder portion (Rubber composition B) |
| 15a, 15b | Rubber strip made of rubber composition B |
| 20 | First forming drum |
| 21 | Innerliner |
| 22 | Ply |
| 23, 23a, 23b | Beads |
| 24, 24a, 24b | Sidewall (SW) |
| 27 | Rubber composition for forming center portion (Rubber composition A) |
| 27a | Rubber strip made of rubber composition A |
| 30 | Second forming drum |

**Claims**

1. A pneumatic tire having a tread portion comprising a shoulder portion (1) and a center portion (2), wherein the center portion (2) is formed by a rubber composition A which contains a rubber component A, a reinforcing filler A, and solid fine particles A having an average particle size of 1 $\mu$m or more, and the shoulder portion (1) is formed by a rubber composition B which contains a rubber component B and a reinforcing filler B, and contains solid fine particles B having an average particle size of 1 $\mu$m or more,

   which is **characterized by** satisfying the following formula,

$$(PB \times RB) \times 2 < PA \times RA$$

   wherein PA is the average particle size of the solid fine particles A, RA is the volume fraction of the blending amount of the solid fine particles A to the blending amount of the rubber component A, PB is the average particle size of the solid fine particles B, and RB is the volume fraction of the blending amount of the solid fine particles B to the blending amount of the rubber component B;
   the solid fine particles A and the solid fine particles B are one or more selected from the group consisting of eggshells, non-metal fibers, glass fiber, zinc oxide whiskers, rice husks, Shirasu and water-soluble metal salt fine particles, and
   the average particle size of the solid fine particles B is less than 80 $\mu$m.

2. The pneumatic tire according to claim 1 **characterized by** satisfying the formula, (PB $\times$ RB) $\times$ 3,5 < PA $\times$ RA.

3. The pneumatic tire according to claim 2 **characterized by** satisfying the formula, (PB $\times$ RB) $\times$ 5 < PA $\times$ RA.

4. The pneumatic tire according to any one of claims 1 to 3, wherein the tire is a studless tire.

5. The pneumatic tire according to any one of claims 1 to 4, wherein the solid fine particle A is an eggshell having an average particle size of 80 $\mu$m or more.

6. The pneumatic tire according to any one of claims 1 to 4, wherein the solid fine particle A is a glass fiber having an average fiber diameter of 15 $\mu$m or more.

**EP 3 957 496 B1**

7. The pneumatic tire according to any one of claims 1 to 4, wherein the solid fine particle A is a zinc oxide whisker having two or more protrusions and having an average length of the protrusions (average needle-like fiber length) of 15 $\mu$m or more.

8. The pneumatic tire according to any one of claims 1 to 7, wherein the reinforcing filler A contains carbon black and silica, the blending amounts of the carbon black and the silica in the rubber component A are each 6% by mass or more with respect to the rubber component A, and the total blending amount of the carbon black and silica is 40% by mass or more with respect to the rubber component A.

9. The pneumatic tire according to any one of claims 1 to 8, wherein the reinforcing filler B contains carbon black or contains carbon black and silica, the blending amount of the carbon black is 6% by mass or more with respect to the rubber component B, and the total blending amount of the carbon black and silica is 30% by mass or more with respect to the rubber component B.

10. The pneumatic tire according to any one of claims 1 to 9, wherein the rubber component A and the rubber component B are a mixed rubber of natural rubber (NR) and butadiene rubber (BR).

11. A method for manufacturing a pneumatic tire according to any one of claims 1 to 10, comprising

a first molding step wherein a side wall (24, 24a, 24b) is wound around both side portions of a first forming drum (20), a pair of beads (23, 23a, 23b) are set at positions corresponding to the width of the product tire inside the side wall (24, 24a, 24b), an innerliner (21) and a ply (22) are pasted to the central portion of the drum (20), and a rubber strip (15a, 15b) made of the rubber composition B is wound by a strip wind, on the ply inside the beads (23, 23a, 23b), on the side wall (24, 24a, 24b) outer outside of the beads (23, 23a, 23b), or on the outside of the side wall (24, 24a, 24b), to form the cover 1;
a tread ring forming step, wherein a breaker (11) and a band (12) are pasted on a second forming drum (30), and a rubber strip (27a) made of the rubber composition A is wound on the band (12) by a strip wind to form a tread ring;
a shaping step, wherein the cover 1 is inserted inside the tread ring and a portion of the cover 1 sandwiched between the beads (23, 23a, 23b) is inflated to crimping the tread ring and the cover 1; and
a turn-up step, wherein, after the shaping step, the sidewall (24, 24a, 24b) outside of the bead (23, 23a, 23b) is folded back toward the bulging side of the cover 1 to paste the sidewall (24, 24a, 24b) to the side of the cover 1, and **characterized by**, in the turn-up step, pasting together the portion of the cover 1 around which the rubber composition B is wound and the portion of the tread ring around which the rubber composition A is wound.

**Patentansprüche**

1. Luftreifen, welcher einen Laufstreifenabschnitt aufweist, der einen Schulterabschnitt (1) und einen Zentrumsabschnitt (2) umfasst, wobei der Zentrumsabschnitt (2) durch eine Kautschukzusammensetzung A gebildet ist, die eine Kautschukkomponente A, einen verstärkenden Füllstoff A und feste Feinpartikel A, die eine mittlere Partikelgröße von 1 $\mu$m oder mehr aufweisen, enthält, und der Schulterabschnitt (1) durch eine Kautschukzusammensetzung B gebildet ist, die eine Kautschukkomponente B und einen verstärkenden Füllstoff B enthält und feste Feinpartikel B, die eine mittlere Partikelgröße von 1 $\mu$m oder mehr aufweisen, enthält,

der **dadurch gekennzeichnet ist, dass** er der folgenden Formel genügt,

$$(PB \times RB) \times 2 < PA \times RA$$

wobei PA die mittlere Partikelgröße der festen Feinpartikel A ist, RA der Volumenbruch der Mischungsmenge der festen Feinpartikel A zur Mischungsmenge der Kautschukkomponente A ist, PB die mittlere Partikelgröße der festen Feinpartikel B ist, und RB der Volumenbruch der Mischungsmenge der festen Feinpartikel B zur Mischungsmenge der Kautschukkomponente B ist;
die festen Feinpartikel A und die festen Feinpartikel B eines oder mehrere sind, welche aus der Gruppe bestehend aus Eierschalen, nicht-metallischen Fasern, Glasfaser, Zinkoxid-Whiskern, Reisspelzen, Shirasu und wasserlöslichen Metallsalz-Feinpartikeln ausgewählt sind, und
die mittlere Partikelgröße der festen Feinpartikel B weniger als 80 $\mu$m beträgt.

**2.** Luftreifen nach Anspruch 1, **dadurch gekennzeichnet, dass** er der Formel $(PB \times RB) \times 3,5 < PA \times RA$ genügt.

**3.** Luftreifen nach Anspruch 2, **dadurch gekennzeichnet, dass** er der Formel $(PB \times RB) \times 5 < PA \times RA$ genügt.

**4.** Luftreifen nach einem der Ansprüche 1 bis 3, wobei der Reifen ein spikeloser Reifen ist.

**5.** Luftreifen nach einem der Ansprüche 1 bis 4, wobei das feste Feinpartikel A eine Eierschale ist, die eine mittlere Partikelgröße von 80 $\mu$m oder mehr aufweist.

**6.** Luftreifen nach einem der Ansprüche 1 bis 4, wobei das feste Feinpartikel A eine Glasfaser ist, die einen mittleren Faserdurchmesser von 15 $\mu$m oder mehr aufweist.

**7.** Luftreifen nach einem der Ansprüche 1 bis 4, wobei das feste Feinpartikel A ein Zinkoxid-Whisker ist, der zwei oder mehr Vorsprünge aufweist und eine mittlere Länge der Vorsprünge (mittlere Länge nadelartiger Fasern) von 15 $\mu$m oder mehr aufweist.

**8.** Luftreifen nach einem der Ansprüche 1 bis 7, wobei der verstärkende Füllstoff A Ruß und Siliziumdioxid enthält, die Mischungsmengen des Rußes und des Siliziumdioxids in der Kautschukkomponente A jeweils 6 Massen-% oder mehr bezogen auf die Kautschukkomponente A betragen, und die gesamte Mischungsmenge des Rußes und Siliziumdioxids 40 Massen-% oder mehr bezogen auf die Kautschukkomponente A betragen.

**9.** Luftreifen nach einem der Ansprüche 1 bis 8, wobei der verstärkende Füllstoff B Ruß enthält oder Ruß und Siliziumdioxid enthält, die Mischungsmenge des Rußes 6 Massen-% oder mehr bezogen auf die Kautschukkomponente B beträgt, und die gesamte Mischungsmenge des Rußes und Siliziumdioxids 30 Massen-% oder mehr bezogen auf die Kautschukkomponente B beträgt.

**10.** Luftreifen nach einem der Ansprüche 1 bis 9, wobei die Kautschukkomponente A und die Kautschukkomponente B ein gemischter Kautschuk mit Naturkautschuk (NR) und Butadienkautschuk (BR) sind.

**11.** Verfahren zur Herstellung eines Luftreifens nach einem der Ansprüche 1 bis 10, umfassend

einen ersten Formungsschritt, wobei eine Seitenwand (24, 24a, 24b) um beide Seitenabschnitte einer ersten Formungstrommel (20) gewickelt wird, ein Paar von Wulsten (23, 23a, 23b) an Positionen, die der Breite des Produktreifens entsprechen, innerhalb der Seitenwand (24, 24a, 24b) gesetzt werden, ein Innerliner (21) und eine Lage (22) auf dem zentralen Abschnitt der Trommel (20) angebracht werden, und ein aus der Kautschukzusammensetzung B hergestellter Kautschukstreifen (15a, 15b) durch eine Streifenwinde auf die Lage innerhalb der Wulste (23, 23a, 23b), auf die Seitenwand (24, 24a, 24b) außen außerhalb der Wulste (23, 23a, 23b) oder auf die Außenseite der Seitenwand (24, 24a, 24b) gewickelt wird, um die Abdeckung 1 zu bilden;
einen Laufstreifenring-Bildungsschritt, wobei ein Breaker (11) und ein Band (12) auf einer zweiten Formungstrommel (30) angebracht werden, und ein aus der Kautschukzusammensetzung A hergestellter Kautschukstreifen (27a) durch eine Streifenwinde auf das Band (12) gewickelt wird, um einen Laufstreifenring zu bilden;
einen Formgebungsschritt, wobei die Abdeckung 1 innerhalb des Laufstreifenrings eingefügt wird und ein zwischen den Wulsten (23, 23a, 23b) befindlicher Abschnitt der Abdeckung 1 aufgeblasen wird, um den Laufstreifenring und die Abdeckung 1 zu verpressen; und
einen Umschlageschritt, wobei, nach dem Formgebungsschritt, die Seitenwand (24, 24a, 24b) außerhalb des Wulstes (23, 23a, 23b) in Richtung der vorgewölbten Seite der Abdeckung 1 zurückgefaltet wird, um die Seitenwand (24, 24a, 24b) an der Seite der Abdeckung 1 anzubringen, und
**gekennzeichnet durch**, in dem Umschlageschritt, Zusammenfügen des Abschnittes der Abdeckung 1, um welchen die Kautschukzusammensetzung B gewickelt ist, und des Abschnittes des Laufstreifenringes, um welchen die Kautschukzusammensetzung A gewickelt ist.

**Revendications**

**1.** Pneu ayant une portion de bande de roulement comprenant une portion d'épaulement (1) et une portion centrale (2), dans lequel la portion centrale (2) est formée par une composition de caoutchouc A qui contient un composant de caoutchouc A, une charge de renforcement A, et de fines particules solides A ayant une taille de particule moyenne de 1 μm ou plus et la portion d'épaulement (1) est formée par une composition de caoutchouc B qui contient un composant de caoutchouc B et une charge de renforcement **B,** et contient de fines particules solides B ayant une taille de particule moyenne de 1 μm ou plus,

qui est caractérisé en satisfaisant la formule suivante,

$$(PB \times RB) \times 2 < PA \times RA$$

dans laquelle PA est la taille de particule moyenne des fines particules solides A, RA est la fraction volumique de la quantité de mélange des fines particules solides A à la quantité de mélange du composant de caoutchouc A, PB est la taille de particule moyenne des fines particule solides B, et RB est la fraction volumique de la quantité de mélange des fines particules solides B à la quantité de mélange du composant de caoutchouc B ;
les fines particules solides A et les fines particules solides B sont une ou plusieurs choisies dans le groupe constitué par les coquilles d'œuf, les fibres non métalliques, une fibre de verre, les poils d'oxyde de zinc, les crêpes de riz, le shirasu et les fines particules de sel métallique hydrosoluble, et
la taille de particule moyenne des fines particules solides B est de moins de 80 μm.

2. Pneu selon la revendication 1 caractérisé en satisfaisant la formule $(PB \times RB) \times 3,5 < PA \times RA$.

3. Pneu selon la revendication 2 caractérisé en satisfaisant la formule $(PB \times RB) \times 5 < PA \times RA$.

4. Pneu selon l'une quelconque des revendications 1 à 3, dans lequel le pneu est un pneu non clouté.

5. Pneu selon l'une quelconque des revendications 1 à 4, dans lequel la fine particule solide A est une coquille d'œuf ayant une taille de particule moyenne de 80 μm ou plus.

6. Pneumatique selon l'une quelconque des revendications 1 à 4, dans lequel la fine particule solide A est une fibre de verre ayant un diamètre de fibre moyen de 15 μm ou plus.

7. Pneu selon l'une quelconque des revendications 1 à 4, dans lequel la fine particule solide A est un poil d'oxyde de zinc ayant deux ou plus de deux saillies et ayant une longueur moyenne des saillies (longueur de fibre de type aiguille moyenne) de 15 μm ou plus.

8. Pneu selon l'une quelconque des revendications 1 à 7, dans lequel la charge de renforcement A contient du noir de charbon et de la silice, les quantités de mélange du noir de charbon et de la silice dans le composant de caoutchouc A sont chacune de 6 % en masse ou plus par rapport au composant de caoutchouc A et la quantité de mélange totale du noir de charbon et de la silice est de 40 % en masse ou plus par rapport au composant de caoutchouc A.

9. Pneu selon l'une quelconque des revendications 1 à 8, dans lequel la charge de renforcement B contient du noir de charbon ou contient du noir de charbon et de la silice, la quantité de mélange du noir de charbon est de 6 % en masse ou plus par rapport au composant de caoutchouc B et la quantité totale de mélange du noir de charbon et de la silice est de 30 % en masse ou plus par rapport au composant de caoutchouc B.

10. Pneu selon l'une quelconque des revendications 1 à 9, dans lequel le composant de caoutchouc A et le composant de caoutchouc B sont un caoutchouc mixte de caoutchouc naturel (NR) et de caoutchouc de butadiène (BR).

11. Procédé de fabrication d'un pneu selon l'une quelconque des revendications 1 à 10, comprenant

une première étape de moulage, dans laquelle une paroi latérale (24, 24a, 24b) est enroulée autour des deux portions latérales d'un premier tambour en formation (20), une paire de talons (23, 23a, 23b) sont réglées à des positions correspondant à la largeur de pneu de produit à l'intérieur de la paroi latérale (24, 24a, 24b), un revêtement intérieur (21) et un pli (22) sont collés à la portion centrale du tambour (20), et une bande de caoutchouc (15a, 15b) constituée de la composition de caoutchouc B est enroulée par une bobine de bande sur le pli à l'intérieur des talons (23, 23a, 23b) ou sur l'extérieur de la paroi latérale (24, 24a, 24b) à l'extérieur des talons (23, 23a, 23b) ou sur l'extérieur de la paroi latérale (24, 24a, 24b) pour former la couverture 1,
une étape de formation d'anneau de bande de roulement, dans laquelle un frein (11) et une bande (12) sont collés sur un second tambour en formation (30) et une bande de caoutchouc (27a) constituée de la composition de caoutchouc A est enroulée sur la bande (12) par une bobine de bande pour former un anneau de bande de roulement,

une étape de formation, dans laquelle la couverture 1 est insérée à l'intérieur de l'anneau de bande de roulement et une portion de la couverture 1 prise en sandwich entre les talons (23, 23a, 23b) est gonflée pour le crêpage de l'anneau de bande de roulement et de la couverture 1 ; et

une étape d'arrivage, dans laquelle, après l'étape de formation, la paroi latérale (24, 24a, 24b) à l'extérieur du talon (23, 23a, 23b) est repliée en retour vers le côté renflé de la couverture 1 pour coller la paroi latérale (24, 24a, 24b) au côté de la couverture 1, et

**caractérisé par**, dans l'étape d'arrivage, le collage ensemble de la portion de la couverture 1 autour de laquelle la composition de caoutchouc B est enroulée et de la portion de l'anneau de bande de roulement autour de laquelle la composition de caoutchouc A est enroulée.

[Fig. 1]

Tire Circumferential Direction

[Fig. 2]

[Fig. 3]

EP 3 957 496 B1

(a)        (b)        (c)        (d)

Paste SW
Paste Inner
⟹ Paste Ply ⟹ Beads set ⟹ Strip wind

[Fig. 4]

(a) Paste Breaker　(b) Paste Band　(c) Strip wind

**EP 3 957 496 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11278015 A
- JP 6041355 A
- JP 2007169500 A
- JP 2009126968 A
- JP 2009154791 A
- JP 2006298215 A
- JP 2008273436 A
- JP 2000264015 A
- JP 2016088030 A
- JP 2016088031 A